Europäisches Patentamt

European Patent Office

Office européen des brevets

(11) Veröffentlichungsnummer: **0 307 561**
**A1**

# (12) EUROPÄISCHE PATENTANMELDUNG

(21) Anmeldenummer: 88110630.6

(22) Anmeldetag: 04.07.88

(51) Int. Cl.4: **B29C 33/56** , **C01G 25/00**

(30) Priorität: 15.09.87 DE 3730858

(43) Veröffentlichungstag der Anmeldung:
22.03.89 Patentblatt 89/12

(84) Benannte Vertragsstaaten:
AT BE CH ES FR GB GR IT LI LU NL SE

(71) Anmelder: **Klöckner Ferromatik Desma GmbH**
**Riegeler Strasse 4**
**D-7831 Malterdingen(DE)**

(72) Erfinder: **Schrammel, Werner Ing.**
**Rothalde 17**
**D-7830 Emmendingen(DE)**

(74) Vertreter: **Kiefer, Winfried, Dipl.-Phys.**
**Klöckner-Werke Aktiengesellschaft**
**Patentabteilung Klöcknerstrasse 29**
**D-4100 Duisburg 1(DE)**

(54) **Form zum Anformen von Sohlen aus zu Polyurethan ausreagierenden Gemischen von Isocyanat und Polyol an Schuhschäfte.**

(57) Die Erfindung betrifft eine Form zum Anformen von Sohlen aus zu Polyurethan ausreagierenden Gemischen von Isocyanat und Polyol an Schuhschäfte, wobei die Form zwei Seitenformteile, einen Bodenstempel und einen Leisten zum Aufziehen der Schuhschäfte aufweist, wobei die Seitenformteile, der Bodenstempel und der Gegenstempel mindestens in ihren mit dem ausreagierenden Gemisch in Kontakt tretenden Bereichen eine Beschichtung aus Zirkonoxid-Keramikwerkstoff haben.

EP 0 307 561 A1

Die Erfindung betrifft eine Form zum Anformen von Sohlen aus zu Polyurethan ausreagierenden Gemischen von Isocyanat und Polyol an Schuhschäfte, wobei die Form zwei Seitenformteile, einen Bodenstempel, ggf. zusätzlich einen Gegenstempel und einen Leisten zum Aufziehen der Schuhschäfte aufweist.

Formen dieser Art sind bekannt (DBP 20 62 008).

Im allgemeinen wird zunächst eine abriebfeste Laufsohle aus einem zu Polyurethan ausreagierenden Gemisch aus Isocyanat und Polyol geformt, anschließend die Zwischensohle ebenfalls aus einem zu Polyurethan ausreagierenden Gemisch aus Isocyanat und Polyol, dem zum Einstellen der Flexibilität im allgemeinen ein Blähmittel beigemischt ist, wobei die Zwischensohle während des Formens gleichzeitig mit der Laufsohle und dem Boden eines Schuhschaftes verbunden wird (DBP 22 41 493).

Diese Formen können als kleine Arbeitsstationen,insbesondere für Versuchszwecke, Baueinheiten bilden, sie kommen vorzugsweise in Schuhbesohlungsmaschinen zum Einsatz, die einen Rundtisch aufweisen, der taktweise verdreht wird.

Der Rundtisch weist auf seinem Umfang in gleichen Abständen jeweils einen Leisten und einen Gegenstempel auf, die als Baueinheit zusammengefaßt und höhenverstellbar um eine horizontale, in radialer Richtung zeigende Achse verschwenkbar sind.

Die Schuhbesohlungsmaschine weist zwei ortsfeste Arbeitsstationen mit jeweils zwei Seitenformteilen und einem höhenverstellbaren Bodenstempel auf. In der ersten Arbeitsstation formen die beiden Seitenformteile und der Bodenstempel mit den Gegenstempeln die Laufsohlen , in der zweiten Arbeitsstation formen der Bodenstempel mit der auf ihr befindlichen Laufsohle und Seitenformteilen mit einem aufgeleisteten Schaft die Zwischensohle.

Die Seitenformteile begrenzen in ihrer Schließstellung einen Durchbruch für den höhenverstellbaren Bodenstempel und den Gegenstempel, sowie zwei Angußbohrungen.

Über die untere Angußbohrung wird in der ersten Arbeitsstation das zu der Laufsohle aus Polyurethan ausreagierende Gemisch zugeführt, wobei der obere Angußkanal durch den Gegenstempel verschlossen ist, während in der zweiten Arbeitsstation der untere Angußkanal durch den Bodenstempel verschlossen ist und über den oberen Angußkanal das zu der Zwischensohle das zu Polyurethan ausreagierende Gemisch zugeführt wird, das im allgemeinen das Blähmittel aufweist.

Die beiden Arbeitsstationen weisen jeweils eine Vorrichtung zum Mischen des Isocyanats und des Polyols zu dem zu Polyurethan ausreagierenden Gemisch auf, die im wesentlichen einen Zylinder und eine Schnecke hat.

Während des Mischens steht das Mundstück des Zylinders gegen die Mündung der zugeordneten Angußbohrung an, die von den in Schließstellung befindlichen Seitenformteilen gebildet wird.

Eine dosierte Menge des Gemisches aus Isocyanat und Polyol werden dem Zylinder zugeführt von der Schnecke gemischt und über den Angußkanal in den Formenhohlraum zum Formen der Laufsohle bzw. Zwischensohle in der ersten Arbeitsstation bzw. zweiten Arbeitsstation gefördert.

Während in der einen Arbeitsstation der fertige Schuh entleistet, ein neuer Schuhschaft aufgeleistet und mit den Seitenformteilen und dem Bodenstempel, der eine bereits geformte Laufsohle aufweist, in Eingriff gebracht wird, werden in der anderen Arbeitsstation der Gegenstempel, die Seitenformteile und der Bodenstempel zum Formen einer Laufsohle in Eingriff gebracht.

Vor jedem Arbeitstakt, d.h. vor dem Anformen einer Laufsohle bzw. Zwischensohle müssen in der ersten bzw. zweiten Arbeitsstation die mit dem ausreagierenden Gemisch in Kontakt tretenden Bereiche der Formen mit einem Trennmittel besprüht werden, damit ein Anhaften des ausreagierten Polyurethans an den Formenteilen unterbunden wird.

Das Aufbringen des Trennmittels ist aufgrund der zum Teil komplizierten Geometrie der Formen, insbesondere im Bereich von Hinterschneidungen zum Teil recht schwierig, da ein zusammenhängender Film aus Trennmittel gebildet werden muß. Es ist z.B. üblich, in einem elektrostatischen Feld das Trennmittel aufzubringen.

Es ist ohne weiteres verständlich, daß hierdurch die Taktzeiten erheblich verlängert werden, und daß in den Fällen, in denen Trennmittel auf der Fläche der geformten Laufsohle gelangt, die anschließend mit der Zwischensohle in Kontakt tritt, die innige Verbindung der beiden Sohlen nachteilig beeinflußt werden kann. Erschwerend tritt hinzu, daß nicht gewährleistet ist, daß stets ein zusammenhängender Trennmittelfilm gebildet wird, so daß durch das Festhaften der geformten Sohlen an den Formenteilen bzw. das Festhaften von Polyurethanresten Betriebsunterbrechungen auftreten.

Der Erfindung liegt die Aufgabe zugrunde, eine Form der eingangs erwähnten Art zu schaffen bzw. auszubilden, daß stets ein Festhaften unterbunden wird.

Diese Aufgabe wird bei einer Form zum Anformen von Sohlen aus zu Polyurethan ausreagierenden Gemischen von Isocyanat und Polyol an Schuhschäfte, wobei die Form zwei Seitenformteile, einen Bodenstempel und einen Leisten zum Aufziehen der Schuhschäfte aufweist, dadurch gelöst, daß die Seitenformteile und der Bodenstempel in ihren mit dem ausreagierenden Gemisch in Kontakt tretenden Bereichen eine Beschichtung aus Zirkonoxid-Keramikwerkstoff aufweisen und daß die Beschichtung eine polierte Oberfläche hat.

Diese Aufgabe wird bei einer Form zum Anformen von Sohlen aus zu Polyurethan ausreagierenden Gemischen von Isocyanat und Polyol an Schuhschäfte, wobei die Form zwei Seitenformteile, einen Bodenstempel, einen Gegenstempel und einen Leisten zum Aufziehen der Schuhschäfte aufweist, dadurch gelöst, daß die Seitenformteile, der Bodenstempel und der Gegenstempel in ihren mit den ausreagierenden Gemisch in Kontakt tretenden Bereichen eine Beschichtung aus Zirkonoxid-Keramikwerkstoff aufweisen und die Beschichtung eine polierte Oberfläche hat.

In völliger Abkehr vom bisherigen Stand der Technik wird somit vom Einsatz eines Trennmittels abgesehen. Es zeigte sich überraschenderweise, daß zu Polyurethan ausreagierendes Gemisch aus Isocyanat und Polyol nach dem Ausreagieren auf poliertem Zirkonoxid-Keramikstoff nicht mehr fest zu haften vermag und gewissermaßen abgestreift werden kann.

Eine Erklärung ist eventuell darin zu sehen, daß Grenzflächeneffekte zwischen dem Zirkonoxid-Keramikwerkstoff und dem ausreagierten Gemisch ein festes Anhaften unterbinden bzw. reduzieren.

Die Erfindung ist in der Zeichnung anhand eines Ausführungsbeispiels einer Form mit zwei Seitenformteilen, einem Bodenstempel und einem Gegenstempel erläutert.

Es zeigen:

Fig. 1 in einer Explosionsdarstellung eine Form bestehend aus Seitenformteilen, Bodenstempel, Gegenstempel sowie einem Leisten und

Fig. 2 eine vergrößerte Darstellung der Einzelheit X aus Figur 1.

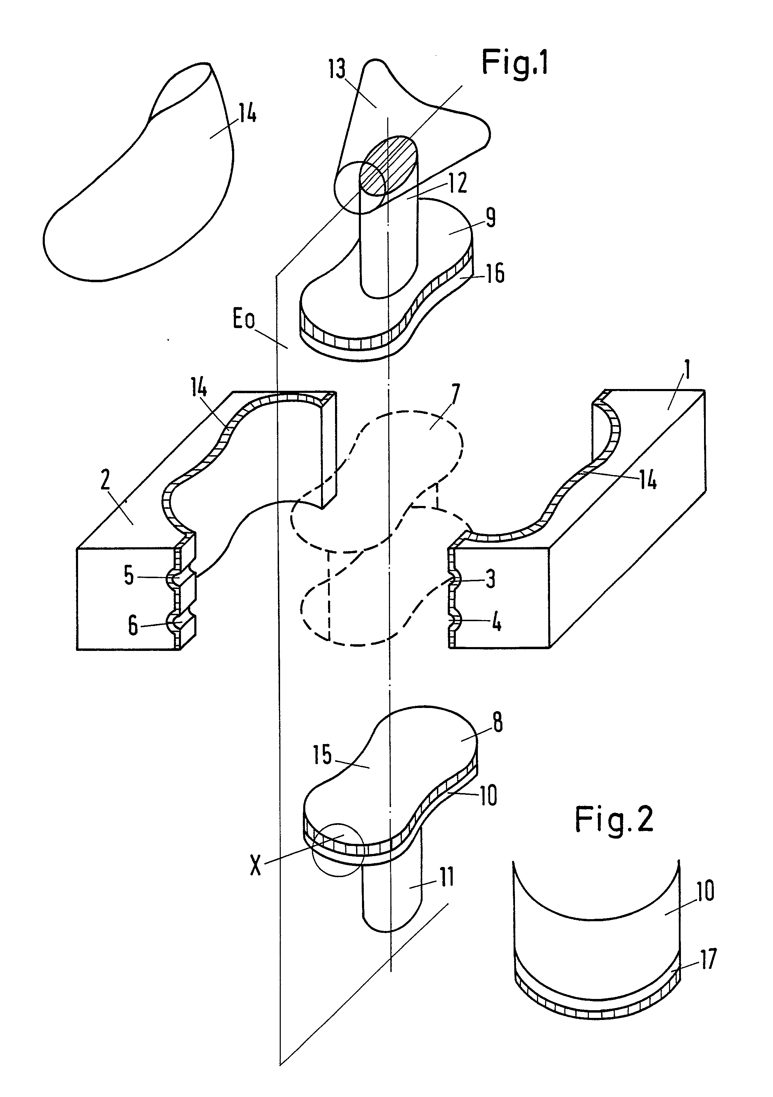

In Figur 1 sind mit 1 und 2 die Seitenformteile dargestellt, die sich in ihrer Offenstellung befinden und Ausnehmungen 3 und 4 bzw. 5 und 6 aufweisen.

In der Schließstellung stehen die beiden Seitenformteile in der eingezeichneten Ebene Eo in gegenseitiger Anlage, lwobei die Ausnehmungen 3 und 5 den oberen Angußkanal und die Ausnehmungen 4 und 6 den unteren Angußkanal begrenzen, die in den strichliert eingezeichneten, von den beiden Seitenformteilen in ihrer Schließstellung begrenzten Durchbruch 7 münden.

Unterhalb der beiden Seitenformteile 1 und 2 befindet sich der Bodenstempel 8, oberhalb der beiden Seitenformteile der Gegenstempel 9, die nach dem Prinzip eines Kolbens praktisch spielfrei in den Durchbruch 7 eintauchen und auf einem Profil 11 bzw. 12 angeordnet sind.

Zur Höhenverstellung des Bodenstempels ist ein nicht dargestellter Arbeitszylinder vorgesehen, dessen Kolbenstange mit dem Profil 11 identisch ist. Das Profil 12 des Gegenstempels 9 ist an einem an sich bekannten und lediglich im Ausschnitt dargestellten Schwenkkopf 13 befestigt, wobei diametral zu dem Distanzstück 13 am Schwenkkopf der Leisten 14 befestigt ist, der der Übersichtlichkeit halber seitlich in Figur 1 dargestellt ist.

Die Seitenformteile weisen in Richtung zum Durchbruch und an ihren Kontaktflächen eine Beschichtung 14 aus Zirkonoxid-Keramikwerkstoff auf, der Bodenstempel in Richtung zum Durchbruch eine Beschichtung 15 und der Gegenstempel ebenfalls in Richtung zum Durchbruch eine Beschichtung 16 aus Zirkonoxid-Keramikmaterial auf.

Während des Formens einer Zwischensohle befinden sich die beiden Seitenformteile 1 und 2 in ihrer Schließstellung, der Bodenstempel taucht in den Durchbruch so weit ein, daß er die Angußbohrung 6, 4 freigibt, während der Gegenstempel so tief in den Durchbruch eintaucht, daß er die Angußbohrung 5, 3 verschließt. Anschließend wird über die Angußbohrung 6, 4 zu Polyurethan ausreagierendes Gemisch in den gebildeten Formenhohlraum gefördert, das zur Laufsohle ausreagiert. Anschließend werden die Seitenformteile in ihre Offenstellung verbracht, der Bodenstempel hochgefahren, der Schwenkkopf verschwenkt, der Leisten 14 mit einem nicht dargestellten aufgezogenen Schuhschaft in die Position des Gegenstempels gebracht, die Seitenformteile in Schließstellung gebracht und der Leisten mit dem aufgezogenen Schuhschaft mit dem Durchbruch in Kontakt gebracht, der Bodenstempel mit der gebildeten Laufsohle so weit hochgefahren, daß die Angußbohrung 6, 4 verschlossen ist, wobei dann über den geöffneten Durchbruch 3, 5 zu Polyurethan ausreagierendes und die Zwischensohle bildendes Gemisch in den gebildeten Formenhohlraum gefördert wird. Nach Ausreagieren des Gemisches zur Zwischensohle, die dann gleichzeitig mit dem Schuhschaft und mit der Laufsohle fest verbunden ist, werden die Seitenformteile in die Offenstellung verfahren, der Schwenkkopf in die Höhe verfahren, der Leisten verschwenkt und der fertige Schuh vom Schaft abgezogen.

Figur 2 zeigt die Einzelheit X in vergrößerter Darstellung. Gemäß Figur 2 wird auf dem Bodenstempel 10 zunächst eine Zwischenschicht 17 aus einer Metallegierung aufgetragen, auf die dann bei 10 000 °C bis 20 000 °C aufgeschmolzenes Zirkonoxid-Keramikpulver aufgeschossen wird. Anschließend wird die gebildete Beschichtung aus Zirkonoxid-Keramikwerkstoff glatt poliert.

Der zum Einsatz kommende Zirkonoxid-Keramikwerkstoff ist z.B. unter dem Handelsnamen SPK OXIDE CERAMICS (Prospekt der Fa. Feldmühle) erhältlich. Als Zwischenschicht wird eine Legierung aufgetragen.

Im allgemeinen weisen die Sohlen eine Laufsohle und eine Zwischensohle auf. Es ist auch für einfaches Schuhwerk üblich, die Sohle nur aus einem Sohlenmaterial herzustellen, d.h. ohne Zwischensohle, so daß dann der Gegenstempel der Form entfällt.

**Ansprüche**

1. Form zum Anformen von Sohlen aus zu Polyurethan ausreagierenden Gemischen von Isocyanat und Polyol an Schuhschäfte, wobei die Form zwei Seitenformteile, einen Bodenstempel und einen Leisten zum Aufziehen der Schuhschäfte aufweist,
dadurch gekennzeichnet,
daß die Seitenformteile und der Bodenstempel mindestens in ihren mit dem ausreagierenden Gemisch in Kontakt tretenden Bereichen eine Beschichtung aus Zirkonoxid-Keramikwerkstoff aufweisen und die Beschichtung eine polierte Oberfläche hat.

2. Form zum Anformen von Sohlen aus zu Polyurethan ausreagierenden Gemischen von Isocyanat und Polyol an Schuhschäfte, wobei die Form zwei Seitenformteile, einen Bodenstempel, einen Gegenstempel und einen Leisten zum Aufziehen der Schuhschäfte aufweist,
dadurch gekennzeichnet,
daß die Seitenformteile, der Bodenstempel und der Gegenstempel mindestens in ihren mit dem ausreagierenden Gemisch in Kontakt tretenden Bereichen eine Beschichtung aus Zirkonoxid-Keramikwerkstoff aufweisen und die Beschichtung eine polierte Oberfläche hat.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | JAPANESE PATENT GAZETTE, Sektion Ch, Woche 8651, Derwent Publications Ltd, London, GB; & JP-A-61 249 735 (TOYO SODA) * Klasse A, Nr. 86-335043/51 * | 1,2 | B 29 C 33/56 C 01 G 25/00 |
| X | PATENT ABSTRACTS OF JAPAN, Band 11, Nr. 269 (M-621), 2. September 1984; & JP-A-62 073 922 (HITACHI METALS LTD) * Zusammenfassung * | 1,2 | |
| X | JAPANESE PATENT GAZETTE, Sektion Ch, Woche 8742, Derwent Publications Ltd, London, GB; & JP-A-62 208 919 (MATSUSHITA ELEC. IND. K.K.) * Klasse A, Nr. 87-29 6361 * | 1,2 | |
| P,X | GB-A-2 189 181 (KLOCKNER FERROMATIK DESMA GmbH) | 1,2 | |
| D,A | FR-A-2 197 309 (DESMA-WERKE AG) | | RECHERCHIERTE SACHGEBIETE (Int. Cl.4) |
| D,A | DE-B-2 062 008 (SEMPERIT AG) | | B 29 C C 01 G |

Der vorliegende Recherchenbericht wurde für alle Patentansprüche erstellt

| Recherchenort | Abschlußdatum der Recherche | Prüfer |
|---|---|---|
| DEN HAAG | 08-09-1988 | ROBERTS P.J. |